# EUROPÄISCHE PATENTANMELDUNG

(11) **EP 2 036 441 A2**
(43) Veröffentlichungstag der Anmeldung: **18.03.2009**
(21) Anmeldenummer: 08015470.1
(22) Anmeldetag: 02.09.2008
(51) Int. Cl.: A23G 9/32, A23G 9/46

(54) **Sorbet mit Sauerstoff**

(30) Priorität: 12.09.2007 DE 102007043337
(71) Anmelder: Frenzel Tiefkühlkost e. K., 04720 Mochau OT Choren (DE)
(72) Erfinder: Frenzel, Volkmar, 04720 Mochau (DE)
(74) Vertreter: Keilitz, Wolfgang

(57) **Zusammenfassung**

Die Erfindung betrifft ein Verfahren zur Herstellung eines Sorbets aus einer Fruchtzubereitung. Eine leistungssteigernde und wohltuende Wirkung beim Verzehr von Sorbet kann erzielt werden, wenn das Sorbet in einem Druckbehälter (2) unter hohem Überdruck mit Sauerstoff (6) vermengt und danach tiefgefroren wird.

## Beschreibung

Die Erfindung betrifft ein Verfahren zur Herstellung eines Sorbets gemäß dem Oberbegriff des Patentanspruchs 1, sowie ein Sorbet gemäß dem Oberbegriff des Patentanspruchs 9.

Sorbet wird aus einer Fruchtzubereitung hergestellt, die noch mit Aromastoffen und Gewürzen versetzt werden kann. Die Fruchtzubereitung wird aus dem Fruchtfleisch von Früchten, vor allem Zitronen, Orangen, Ananas, sowie vielen anderen Früchten hergestellt. Die fertige Sorbet-Grundmasse wird in eine Verpackung abgefüllt und tiefgefroren.

Es ist nun die Aufgabe der vorliegenden Erfindung, die für den Körper wohltuende und gesundheitsfördernde Wirkung von Sorbet zu verbessern.

Gelöst wird diese Aufgabe gemäß der Erfindung durch die im Patentanspruch 1 sowie im Patentanspruch 9 angegebenen Merkmale. Weitere Ausgestaltungen der Erfindung sind Gegenstand von Unteransprüchen.

Ein wesentlicher Aspekt der Erfindung besteht darin, die Sorbet-Grundmasse unter hohem Druck mit Sauerstoff aufzuschäumen, um dadurch ein Sorbet mit hohem Sauerstoffgehalt zu erzeugen. Wie bereits nachgewiesen werden konnte, wird der Sauerstoff beim Verspeisen über den Mund und die Magenschleimhaut aufgenommen und gelangt in die Blutbahn. Dadurch erhöht sich der Sauerstoffgehalt des Blutes, wodurch sich die Leistungsfähigkeit und das Wohlbefinden des Konsumenten verbessert.

Zur Herstellung der mit Sauerstoff versetzten Sorbet-Grundmasse wird die Fruchtzubereitung zunächst in einen Druckbehälter verbracht und dort mit Sauerstoff, vorzugsweise reinem Sauerstoff, unter Druck aufgeschäumt. Der Druck kann beispielsweise zwischen 20 bar und 80 bar betragen und liegt vorzugsweise bei etwa 40 bar. Durch den hohen Überdruck wird die Sorbet-Grundmasse aufgeschäumt und kann wesentlich mehr Sauerstoff aufnehmen.

Die Sorbet-Grundmasse besteht im Wesentlichen aus natürlichem Fruchtfleisch, z.B. von Zitronen, Ananas, Orangen, Erdbeeren, Himbeeren, Johannisbeeren, Kirschen, Sauerkirschen, etc.. Darüber hinaus können der Grundmasse noch Aromastoffe, wie z.B. Zitronenschalen, Orangenschalen, etc., sowie Gewürze, wie z.B. Zimt, zugefügt werden. Außerdem kann die Grundmasse auch mit Spirituosen, wie z.B. Cognac oder Grappa verfeinert werden. Zucker oder ein anderer Süßstoff kann ebenfalls zugefügt werden.

Bei Verwendung der vorstehend genannten Früchte, insbesondere Zitrusfrüchte, ist es nicht unbedingt notwendig, zusätzliche Vitamine beizumischen. Wahlweise können aber auch Vitamine, insbesondere Vitamin A, B oder E, sowie Mineralstoffe und Spurenelemente, wie z.B. Selen, beigemengt werden.

Das erfindungsgemäße Sorbet mit Sauerstoff kann selbstverständlich auch in Bio-Qualität hergestellt werden.

Die mit Sauerstoff versetzte Grundmasse wird nach Ihrer Fertigstellung vorzugsweise in Endverpackungen abgefüllt und tiefgefroren, insbesondere schockgefrostet.

Der Sauerstoffgehalt des fertigen, gefrorenen Sorbets beträgt vorzugsweise zwischen 20% und 50% (Vol.) und liegt vorzugsweise bei etwa 40%. Der Sauerstoffgehalt im fertigen Produkt ist in jedem Fall höher, als wenn die Masse mit Luft aufgeschämt worden wäre.

Anstelle eines Sorbets könnte wahlweise auch eine Eiscreme mit Sauerstoff hergestellt werden.

Die Erfindung wird nachstehend anhand der beigefügten Zeichnung beispielhaft näher erläutert.

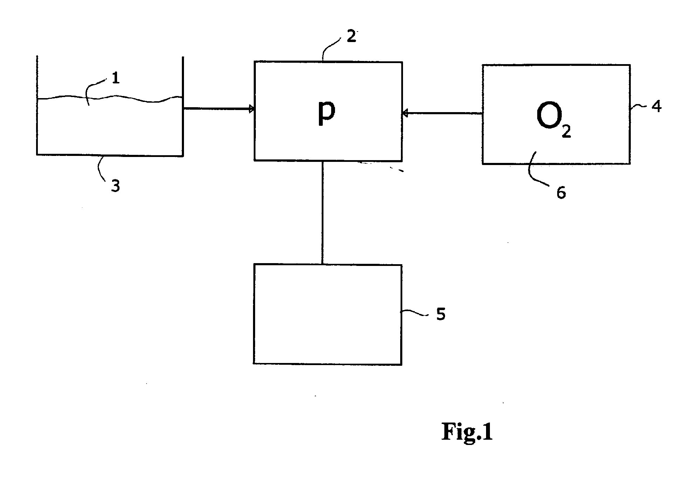

Fig. 1 zeigt eine schematische Darstellung der wesentlichen Prozessschritte bei der Herstellung von Sauerstoff-Sorbet. Dabei bezeichnet die Bezugsziffer 1 eine Sorbet-Grundmasse, die im Wesentlichen aus einer Fruchtzubereitung aus Zitronen, Orangen, Ananas, Kirschen, Erdbeeren, etc. hergestellt sein kann. Der Grundmasse können je nach Rezept auch Aromastoffe, Vitamine, Mineralstoffe, etc. beigefügt sein. Die Sorbet-Grundmasse 1 wird nach ihrer Fertigstellung vom Gefäß 3 in einen Druckbehälter 2 verbracht. Der Druckbehälter 2 steht mit einem Sauerstoffbehälter 4 in Verbindung, in dem sich reiner Sauerstoff befindet.

Durch Öffnen eines Ventils (nicht gezeigt) wird der Sauerstoff 6 in den Druckbehälter 2 eingelassen und mit der Grundmasse 1 vermengt. Durch den hohen Überdruck von etwa 40 bar wird die Grundmasse aufgeschäumt. Der Sauerstoff kann sich dabei in den einzelnen Zellen der schaumigen Masse ansammeln.

Nach Erreichen eines bestimmten Sättigungsgrades wird die aufgeschäumte Grundmasse portioniert und vorzugsweise schockgefrostet. Die einzelnen Portionen werden dann in Verpackungsbehälter 5 abgefüllt. Mehrere dieser Verpackungsbehälter können zusätzlich in einer Umverpackung verpackt werden. Das gefrorene Sorbet enthält dabei einen Sauerstoffgehalt von etwa 30 % bis 50 % (Vol.).

## Patentansprüche

1. Verfahren zur Herstellung eines Sorbets aus einer Fruchtzubereitung, **dadurch gekennzeichnet, dass** die Fruchtzubereitung (1) unter hohem Überdruck mit Sauerstoff (6) vermengt und danach gefroren wird.

2. Verfahren nach Anspruch 1, **dadurch gekennzeichnet, dass** der Druck zwischen 20 bar und 80 bar, insbesondere etwa 40 bar beträgt.

3. Verfahren nach Anspruch 1 oder 2, **dadurch gekennzeichnet, dass** der Sauerstoffanteil in der gefrorenen Fruchtzubereitung etwa 20% bis 50%, insbesondere etwa 40% beträgt.

4. Verfahren nach einem der vorhergehenden Ansprüche, **dadurch gekennzeichnet, dass** die Fruchtzubereitung (1) nach der Vermengung mit Sauerstoff (6) schockgefrostet wird.

5. Verfahren nach einem der vorhergehenden Ansprüche, **dadurch gekennzeichnet, dass** der Fruchtzubereitung (1) ein Süßstoff beigemengt wird.

6. Verfahren nach einem der vorhergehenden Ansprüche, **dadurch gekennzeichnet, dass** die Fruchtzubereitung (1) aus Erdbeeren, Himbeeren, Johannesbeeren, Kirschen, Sauerkirschen oder anderen Früchten, oder aus einer Mischung daraus hergestellt wird.

7. Verfahren nach einem der vorhergehenden Ansprüche, **dadurch gekennzeichnet, dass** der Fruchtzubereitung Vitamin A, C oder E oder wenigstens ein Mineralstoff beigemengt wird.

8. Verfahren nach einem der vorhergehenden Ansprüche, **dadurch gekennzeichnet, dass** die mit Sauerstoff (6) vermengte Fruchtzubereitung (1) zunächst in Einzelportionen portioniert und anschließend schockgefrostet wird.

9. Sorbet, bestehend aus einer Fruchtzubereitung (1), **dadurch gekennzeichnet, dass** es einen Sauerstoffanteil zwischen 20% und 50% enthält.
